# FASCICULE DE BREVET EUROPEEN

(11) **EP 3 787 863 B1**
(45) Date de publication et mention de la délivrance du brevet: **12.04.2023**
(21) Numéro de dépôt: 19728123.1
(22) Date de dépôt: 26.04.2019
(51) Int. Cl.: B29C 33/10, B29D 30/06

(54) **ELEMENT MOULANT AVEC FENTE D'EVACUATION D'AIR CONVERGENTE**
FORMSTÜCK ELEMENT MIT DIVERGIERENDER ENTLÜFTUNGSÖFFNUNG
MOLDING ELEMENT COMPRISING DIVERGING AIR VENT

(30) Priorité: 30.04.2018 FR 1800394
(43) Date de publication de la demande: 10.03.2021
(73) Titulaire: Compagnie Générale des Etablissements Michelin, 63000 Clermont-Ferrand (FR)
(72) Inventeur: CALVEL, Romain, 63040 Clermont-Ferrand Cedex 09 (FR); LESMARIE, Michel, 63040 Clermont-Ferrand Cedex 09 (FR)
(74) Mandataire: Roussy, Delphine
(86) Numéro de dépôt international: PCT/IB2019/053447
(87) Numéro de publication internationale: WO 2019/211709

(56) Documents cités:
- EP-A1- 2 669 078
- DE-A1- 1 800 081
- GB-A- 1 166 182
- JP-A- 2008 068 448
- US-A- 5 059 380

## Description

### DOMAINE TECHNIQUE DE L'INVENTION

La présente invention concerne un élément moulant destiné à être assemblé dans un moule pour le moulage de la partie extérieure de la bande de roulement d'un pneumatique, ledit élément moulant comprenant une surface de moulage pourvue de motifs destinés au moulage de la bande de roulement et au moins une fente pour l'évacuation d'un flux d'air de l'intérieur vers l'extérieur du moule.

### ETAT DE LA TECHNIQUE ANTERIEURE

Lors du processus de moulage et de vulcanisation des pneumatiques, les effets combinés de la pression, de la température et des réactions chimiques en cours génèrent une certaine quantité de gaz qui doit être libérée du moule pendant le moulage. Pour mettre en place des moyens d'évacuation des gaz, les industriels utilisent en général une solution consistant à utiliser des moules dont la couronne externe comporte des petits trous formant une pluralité des tunnels d'évacuation répartis sur la circonférence du moule. Cette approche est certes efficace pour assurer le passage des gaz, mais produit à la surface de la bande de roulement des picots, de forme correspondante au profil des trous, formés par le mélange caoutchoutique qui a tendance à fluer dans les ouvertures d'éventation. Ces picots, disséminés sur la périphérie de la bande de roulement et souvent sur une portion des flancs du pneumatique, affectent l'esthétique du produit final et perdurent tant et aussi longtemps que le pneumatique n'a pas roulé un certain nombre de kilomètres. Pour éviter la présence de ces picots, les industriels recherchent depuis longtemps une solution pour permettre le flux d'air ou de gaz vers l'extérieur du moule, sans toutefois dégrader l'aspect final du produit nouvellement moulé.

Le document US5059380 décrit un exemple de solution permettant une ventilation du moule avec formation de picots. Le moule décrit comprend une pluralité d'inserts prévus pour permettre le passage de l'air lors du moulage. Pendant le moulage, le mélange caoutchoutique peut fluer et s'introduire dans les inserts, formant ainsi des picots à la surface de la bande de roulement.

Le document EP1361042 décrit un moule pour pneumatique comportant une couronne périphérique feuilletée. Cette couronne est constituée par un empilage dans la direction circonférentielle d'une pluralité de tôles de faible épaisseur. Des découpes réparties sur plusieurs tôles adjacentes augmentent le potentiel d'éventation du moule. Ce mode de réalisation est efficace pour un moule feuilleté uniquement.

Le document GB 1 166 182 A décrit un autre élément moulant destiné à être assemblé dans un moule pour le moulage d'un pneumatique.

Il existe donc un besoin pour un moule favorisant l'évacuation de l'air pendant le moulage, mais sans affecter l'esthétique du pneumatique moulé.

Pour pallier ces différents inconvénients, l'invention prévoit différents moyens techniques.

### EXPOSE DE L'INVENTION

Tout d'abord, un premier objet de l'invention consiste à prévoir un élément moulant pour le moulage de la partie extérieure de la bande de roulement d'un pneumatique permettant l'évacuation de l'air libéré lors des phases de vulcanisation, sans formation de picots à la surface de la bande de roulement.

Un autre objet de l'invention consiste à prévoir un élément moulant pour le moulage de la partie extérieure de la bande de roulement d'un pneumatique permettant de contrôler le niveau de fluage du mélange élastomère dans les fentes d'évacuation d'air afin de générer des micro-sculptures.

Pour ce faire, l'invention prévoit un élément moulant destiné à être assemblé dans un moule pour le moulage d'un pneumatique selon la revendication 1.

Une telle architecture permet, lors de la phase de vulcanisation d'un pneumatique, l'évacuation de l'air libéré dans le moule vers l'extérieur du moule, sans formation de « picots » comme dans les moules traditionnels. L'esthétisme des sculptures de la bande de roulement moulée n'est pas dégradé. La configuration et les dimensions du secteur convergent permettent de gérer le niveau de fluage du mélange caoutchoutique vers les moyens d'éventation. Par ailleurs, l'accès au moyen d'éventation est facilité, par exemple pour des opérations de nettoyage de l'élément moulant, en particulier au niveau des fentes de l'élément moulant.

Par « moyen d'éventation », on entend un tunnel étroit permettant l'évacuation de l'air vers l'extérieur du moule lors de la phase de vulcanisation, l'agencement et les dimensions du tunnel étant adaptés pour éviter que le mélange caoutchoutique en cours de moulage ne puisse obturer le tunnel.

Selon un mode de réalisation avantageux, la première partie desdits moyens d'éventation comprend un secteur droit agencé entre ledit secteur convergent et ladite deuxième partie.

Selon un autre mode de réalisation avantageux, la première partie desdits moyens d'éventation comprend un secteur divergent agencé entre ledit secteur convergent et ladite deuxième partie.

De manière avantageuse, la première partie forme une fente allongée sur la surface de moulage.

La fente permet l'évacuation de l'air hors de la zone de moulage. L'air peut s'écouler dans les fentes dans le sens indiqué par la flèche «sens d'évacuation de l'air».

Selon un mode de réalisation avantageux, ladite deuxième partie est constituée d'une cavité cylindrique. La cavité peut être coaxiale ou non à un plan F-F de la fente.

Selon un autre mode de réalisation avantageux, ladite deuxième partie forme une rainure sur la surface externe, ladite rainure s'étendant sur tout ou partie de la longueur de la fente allongée. La rainure peut être coaxiale ou non au plan F-F de la fente.

Du fait que le procédé de mise en oeuvre de la première partie est en général efficace jusqu'à environ 3mm d'épaisseur, il est avantageux de prévoir un autre mode de mise en oeuvre pour la deuxième partie, depuis l'extérieur du moule. Ainsi, la cavité ou la rainure de la deuxième partie facilitent la réalisation d'un moyen d'éventation traversant tout l'élément moulant, difficile à réaliser en effectuant un perçage unique depuis l'intérieur de l'élément moulant, en particulier pour de faibles largeurs de fentes.

De manière avantageuse, ladite première partie comprend deux parois opposées, au moins une portion d'au moins une desdites parois opposées est inclinée d'un angle α par rapport à un plan F-F du moyen d'éventation de façon à former ledit secteur convergent, l'angle α étant supérieur à 5° et plus préférentiellement supérieur à 10° et encore plus préférentiellement supérieur à 20° par rapport audit plan F-F.

Egalement de manière avantageuse, ladite première partie comprend deux parois opposées, au moins une portion d'au moins une desdites parois opposées est inclinée d'un angle β par rapport au plan F-F du moyen d'éventation de façon à former ledit secteur convergent, l'angle β étant supérieur à 5° et plus préférentiellement supérieur à 10° et encore plus préférentiellement supérieur à 20° par rapport audit plan F-F.

Selon les modes de réalisation mis en œuvre, les angles α et β sont identiques ou différents.

De manière avantageuse, la profondeur P de la première partie (5) est inférieure ou égale à 3mm.

Selon l'invention, la largeur L1 de ladite première partie est prévue entre 0,03mm et 0,07mm et la largeur L2 de la deuxième partie se situe entre 1mm et 5mm et plus préférentiellement entre 2mm et 3mm.

Selon un mode de réalisation, l'invention prévoit également un moule pour pneumatique comprenant une pluralité d'éléments moulants tels que préalablement décrits.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1a est une vue en coupe d'une représentation schématique d'un exemple d'une portion d'un élément moulant avec un moyen d'éventation ;
- la figure 1b est une vue depuis la surface de moulage de l'élément moulant de la figure 1a ;
- la figure 2 est une variante de réalisation de l'élément moulant de la figure 1a ;
- la figure 3 est une autre variante de réalisation l'élément moulant de la figure 1a ;
- la figure 4a est une vue en perspective d'une représentation schématique d'un exemple d'une portion d'un élément moulant avec un moyen d'éventation ;
- la figure 4b est une variante de réalisation de l'élément moulant de la figure 4a ;
- la figure 5 est une vue depuis la surface de moulage une variante d'un exemple de moyen d'éventation.

### DESCRIPTION DETAILLEE DE L'INVENTION

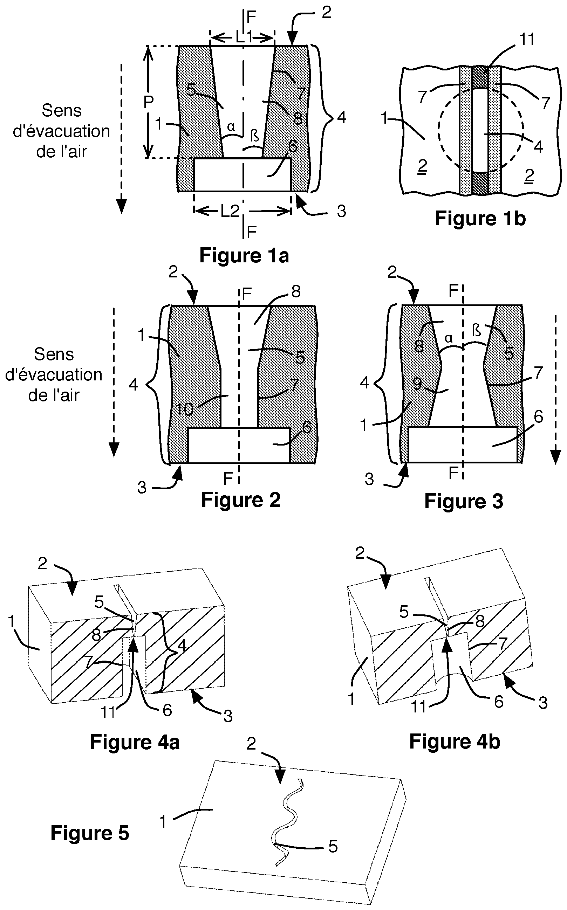

La figure 1a illustre une portion d'un élément moulant 1 destiné à être placé dans un moule afin de structurer la bande de roulement d'un pneumatique lors de la phase de moulage. L'élément moulant comprend une surface de moulage 2 de bande de roulement prévue pour mouler la bande de roulement, et une surface externe 3 disposée à l'opposé de la surface de moulage 2. Dans l'exemple, l'élément moulant 1 comprend un moyen d'éventation 4. Le moyen d'éventation permet d'évacuer l'air présent dans le moule lors de la phase de moulage. L'évacuation se fait depuis l'intérieur du moule, vers la surface externe du moule 3, dans le sens de la flèche illustrée aux figures 1a, 2 et 3. Tel qu'illustré à la figure 1a, le moyen d'éventation 4 comporte une première partie 5 en communication fluidique avec la surface de moulage 2. Une deuxième partie 6 est en communication fluidique avec la surface externe 3 du moule. Les deux parties sont au moins partiellement alignées l'une avec l'autre de façon à permettre le passage du flux d'air à évacuer du moule. Dans les exemples illustrés, la première partie 5 et la deuxième partie 6 sont coaxiales par rapport à un plan F-F. Le plan F-F passe par le centre de la première partie 5 et par le centre de la deuxième partie 6.

La première partie 5 comporte des parois 7 inclinées de telle sorte qu'elles convergent vers la deuxième partie 6, formant un secteur convergent 8. Les parois 7 opposées sont inclinées d'un angle α et d'un angle β par rapport au plan F-F. L'angle α est supérieur à 5° et plus préférentiellement supérieur à 10° et encore plus préférentiellement supérieur à 20° par rapport au plan F-F du moyen d'éventation 4. L'angle β est supérieur à 5° et plus préférentiellement supérieur à 10° et encore plus préférentiellement supérieur à 20° par rapport au plan F-F dudit moyen d'éventation 4. En variante, les angles α et β sont identiques.

La profondeur P de la première partie 5 est inférieure ou égale à 5mm et plus préférentiellement inférieure à 3mm. Une telle profondeur permet de réaliser la première partie à l'aide de procédés d'usinage tels que le laser guidé dans un jet d'eau. Un tel procédé permet de mettre en oeuvre des fentes très minces. En effet, la largeur maximale L1 de la première partie 5 est comprise entre 0,03mm et 0,07mm.

La largeur maximale L1 de la première partie 5 est inférieure à la largeur L2 de la deuxième partie 6. La largeur L2 de la deuxième partie 6 est comprise entre 1mm et 5mm, et plus préférentiellement entre 2mm et 3mm.

La figure 1b illustre le moyen d'éventation 4 vu depuis la surface de moulage 2. La première partie 5 forme une fente allongée. Cette fente peut être sensiblement rectiligne, et/ou courbée, et/ou ondulée telle qu'illustrée dans l'exemple de la figure 5, et/ou en ligne brisée et/ou autre. Au moins une portion de cette fente est en communication fluidique avec la deuxième partie 6, afin de permettre le passage du flux d'air vers l'extérieur du moule. Dans l'exemple de la figure 1b, le moyen d'éventation 4 et la deuxième partie 6 sont coaxiaux.

Les figures 2 et 3 sont des variantes du moyen d'éventation 4. La figure 2 illustre un exemple dans lequel la première partie 5 comprend un secteur convergent 8 et un secteur droit 10. Le secteur convergent 8 débouche sur la surface de moulage 2. Le secteur droit 10 est agencé entre le secteur convergent 8 et la deuxième partie 6.

Dans l'exemple de la figure 3, la première partie 5 comprend un secteur convergent 8 et un secteur divergent 9. Le secteur convergent 8 débouche sur la surface de moulage 2. Le secteur divergent 9 est agencé entre le secteur convergent 8 et la deuxième partie 6. Cette mise en oeuvre facilite l'évacuation de l'air vers la deuxième partie et l'extérieur du moule.

Les figures 4a et 4b montrent des coupes d'éléments de moulage avec deux modes de réalisation de la deuxième partie 6. À la figure 4a, la deuxième partie 6 est constituée d'une rainure sur tout ou partie de la première partie 5. Cette rainure permet d'offrir une plus grande ouverture pour la communication fluidique entre la première partie 5 et la deuxième partie 6. Ceci permet à l'air de s'évacuer plus facilement de la surface de moulage 2 vers la surface externe 3, comme l'indique le sens de la flèche aux figures 1a, 2 et 3. Cette rainure peut être coaxiale ou non au plan F-F de la fente. De plus, cet agencement peut permettre de réaliser tout ou partie de la fente avec un laser guidé par jet d'eau en accédant par la surface externe.

Dans l'exemple de la figure 4b, la deuxième partie 6 comprend une ou plusieurs cavités cylindriques. Les cavités peuvent être coaxiales ou non au plan F-F de la fente.

Ces variantes de réalisation permettent de s'assurer de la bonne évacuation de l'air puisque la communication fluidique est assurée entre la première partie 5 et la deuxième partie 6.

**Numéros de référence employés sur les figures**

| | |
|---|---|
| 1 | Élément moulant |
| 2 | Surface de moulage de bande de roulement |
| 3 | Surface externe de l'élément moulant |
| 4 | Moyens d'éventation |
| 5 | Première partie des moyens d'éventation |
| 6 | Deuxième partie des moyens d'éventation |
| 7 | Paroi |
| 8 | Secteur convergent |
| 9 | Secteur divergent |
| 10 | Secteur droit |

## Revendications

1. Élément moulant (1) destiné à être assemblé dans un moule pour le moulage d'un pneumatique, ledit élément moulant (1) comprenant une surface de moulage (2) et une surface externe (3), des moyens d'éventation (4) pour l'évacuation d'un flux d'air de la surface de moulage (2) vers la surface externe (3), lesdits moyens d'éventation (4) comprenant une première partie (5) débouchant sur la surface de moulage (2) et une deuxième partie (6) en communication fluidique avec la première partie (5) et débouchant sur la surface externe (3),
**caractérisé en ce que** la première partie (5) desdits moyens d'éventation (4) comprend au moins un secteur convergent (8), le profil convergent étant orienté vers la surface externe (3), et **en ce que** la largeur L1 de la première partie est prévue entre 0,03mm et 0,07mm, et la largeur L2 de la deuxième partie se situe entre 1 mm et 5mm et plus préférentiellement entre 2mm et 3mm.

2. Élément moulant (1) selon la revendication précédente, **caractérisé en ce que** la profondeur P de la première partie (5) est inférieure ou égale à 3mm.

3. Élément moulant (1) selon l'une quelconque des revendications 1 à 2, **caractérisé en ce que** la première partie (5) desdits moyens d'éventation (4) comprend un secteur droit (10) agencé entre ledit secteur convergent (8) et ladite deuxième partie (6).

4. Élément moulant (1) selon l'une quelconque des revendications 1 à 2, **caractérisé en ce que** la première partie (5) desdits moyens d'éventation (4) comprend un secteur divergent (9) agencé entre ledit secteur convergent (8) et ladite deuxième partie (6).

5. Élément moulant (1) selon l'une quelconque des revendications précédentes, **caractérisé en ce que** la première partie (5) forme une fente sur la surface de moulage (2).

6. Élément moulant (1) selon l'une quelconque des revendications 1 à 5, **caractérisé en ce que** ladite deuxième partie (6) est constituée d'une cavité cylindrique.

7. Élément moulant (1) selon la revendication 5, **caractérisé en ce que** ladite deuxième partie (6) forme une rainure sur la surface externe (3), ladite rainure s'étendant sur tout ou partie de la longueur de la fente allongée.

8. Élément moulant (1) selon l'une quelconque des revendications 1 à 7, dans lequel ladite première partie (5) comprend deux parois (7) opposées, **caractérisé en ce que** au moins une portion d'au moins une desdites parois (7) opposées est inclinée d'un angle α par rapport à un plan F-F du moyen d'éventation (4) de façon à former ledit secteur convergent (8), l'angle α étant supérieur à 5° et plus préférentiellement supérieur à 10° et encore plus préférentiellement supérieur à 20° par rapport audit plan F-F.

9. Élément moulant (1) selon la revendication 8, dans lequel ladite première partie (5) comprend deux parois (7) opposées, **caractérisé en ce que** au moins une portion d'au moins une desdites parois (7) opposées est inclinée d'un angle β par rapport à un plan F-F du moyen d'éventation (4) de façon à former ledit secteur convergent (8), l'angle β étant supérieur à 5° et plus préférentiellement supérieur à 10° et encore plus préférentiellement supérieur à 20° par rapport audit plan F-F.

10. Moule pour pneumatique, comprenant une pluralité d'éléments moulants selon l'une quelconque des revendications 1 à 9.

## Patentansprüche

1. Formelement (1), das dazu bestimmt ist, in einer Form zum Formen eines Reifens zusammengebaut zu werden, wobei das Formelement (1) eine Formfläche (2) und eine Außenfläche (3) sowie Entlüftungsmittel (4) zum Abführen eines Luftstroms von der Formfläche (2) zur Außenfläche (3) umfasst, wobei die Entlüftungsmittel (4) einen ersten Teil (5), der in die Formfläche (2) mündet, und einen zweiten Teil (6), der mit dem ersten Teil (5) in Fluidverbindung steht und in die Außenfläche (3) mündet, umfassen,
**dadurch gekennzeichnet, dass** der erste Teil (5) der Entlüftungsmittel (4) mindestens einen konvergierenden Sektor (8) umfasst, wobei das konvergierende Profil zur Außenfläche (3) hin gerichtet ist, und dass eine Breite L1 des ersten Teils zwischen 0,03 mm und 0,07 mm vorgesehen ist und die Breite L2 des zweiten Teils zwischen 1 mm und 5 mm und vorzugsweise zwischen 2 mm und 3 mm beträgt.

2. Formelement (1) nach dem vorangehenden Anspruch, **dadurch gekennzeichnet, dass** die Tiefe P des ersten Teils (5) 3 mm oder weniger beträgt.

3. Formelement (1) nach einem der Ansprüche 1 bis 2, **dadurch gekennzeichnet, dass** der erste Teil (5) der Entlüftungsmittel (4) einen geraden Sektor (10) umfasst, der zwischen dem konvergierenden Sektor (8) und dem zweiten Teil (6) angeordnet ist.

4. Formelement (1) nach einem der Ansprüche 1 bis 2, **dadurch gekennzeichnet, dass** der erste Teil (5) der Entlüftungsmittel (4) einen divergierenden Sektor (9) umfasst, der zwischen dem konvergierenden Sektor (8) und dem zweiten Teil (6) angeordnet ist.

5. Formelement (1) nach einem der vorangehenden Ansprüche, **dadurch gekennzeichnet, dass** der erste Teil (5) einen Schlitz auf der Formfläche (2) bildet.

6. Formelement (1) nach einem der Ansprüche 1 bis 5, **dadurch gekennzeichnet, dass** der zweite Teil (6) aus einem zylindrischen Hohlraum gebildet ist.

7. Formelement (1) nach Anspruch 5, **dadurch gekennzeichnet, dass** der zweite Teil (6) eine Rille auf der Außenfläche (3) bildet, wobei sich die Rille über die gesamte Länge des länglichen Schlitzes oder über einen Teil davon erstreckt.

8. Formelement (1) nach einem der Ansprüche 1 bis 7, wobei der erste Teil (5) zwei gegenüberliegende Wände (7) umfasst, **dadurch gekennzeichnet, dass** zumindest ein Teil mindestens einer der gegenüberliegenden Wände (7) um einen Winkel α in Bezug auf eine Ebene F-F des Entlüftungsmittels (4) geneigt ist, um den konvergierenden Sektor (8) zu bilden, wobei der Winkel α mehr als 5° und vorzugsweise mehr als 10° und besonders vorzugsweise mehr als 20° in Bezug auf die Ebene F-F beträgt.

9. Formelement (1) nach Anspruch 8, wobei der erste Teil (5) zwei gegenüberliegende Wände (7) umfasst, **dadurch gekennzeichnet, dass** zumindest ein Teil mindestens einer der gegenüberliegenden Wände (7) um einen Winkel β in Bezug auf eine Ebene F-F des Entlüftungsmittels (4) geneigt ist, um den konvergierenden Sektor (8) zu bilden, wobei der Winkel β mehr als 5° und vorzugsweise mehr als 10° und besonders vorzugsweise mehr als 20° in Bezug auf die Ebene F-F beträgt.

10. Reifenform, umfassend mehrere Formelemente nach einem der Ansprüche 1 bis 9.

## Claims

1. Moulding element (1) intended to be assembled in a mould for moulding a tyre, said moulding element (1) comprising a moulding surface (2) and an external surface (3), venting means (4) for venting a flow of air from the moulding surface (2) toward the external surface (3), said venting means (4) comprising a first part (5) opening onto the moulding surface (2) and a second part (6) in fluidic communication with the first part (5) and opening onto the external surface (3), **characterized in that** the first part (5) of said venting means (4) comprises at least one convergent sector (8), the convergent profile being oriented toward the external surface (3), and **in that** the width L1 of the first part is planned to be between 0.03 mm and 0.07 mm and the width L2 of the second part is between 1 mm and 5 mm, and more preferably between 2 mm and 3 mm.

2. Moulding element (1) according to the preceding claim, **characterized in that** the depth P of the first part (5) is less than or equal to 3 mm.

3. Moulding element (1) according to any one of Claims 1 to 2, **characterized in that** the first part (5) of said venting means (4) comprises a straight sector (10) arranged between said convergent sector (8) and said second part (6).

4. Moulding element (1) according to any one of Claims 1 to 2, **characterized in that** the first part (5) of said venting means (4) comprises a divergent sector (9) arranged between said convergent sector (8) and said second part (6).

5. Moulding element (1) according to any one of the preceding claims, **characterized in that** the first part (5) forms a slot on the moulding surface (2).

6. Moulding element (1) according to any one of Claims 1 to 5, **characterized in that** said second part (6) consists of a cylindrical cavity.

7. Moulding element (1) according to Claim 5, **characterized in that** said second part (6) forms a groove on the external surface (3), said groove extending over all or part of the length of the elongate slot.

8. Moulding element (1) according to any one of Claims 1 to 7, wherein said first part (5) comprises two opposite walls (7), **characterized in that** at least one portion of at least one of said opposite walls (7) is inclined by an angle α with respect to a plane F-F of the venting means (4) so as to form said convergent sector (8), the angle α being greater than 5° and more preferably greater than 10°, and more preferably still greater than 20° with respect to said plane F-F.

9. Moulding element (1) according to Claim 8, wherein said first part (5) comprises two opposite walls (7), **characterized in that** at least one portion of at least one of said opposite walls (7) is inclined by an angle β with respect to a plane F-F of the venting means (4) so as to form said convergent sector (8), the angle β being greater than 5° and more preferably greater than 10°, and more preferably still greater than 20° with respect to said plane F-F.

10. Tyre mould comprising a plurality of moulding elements according to any one of Claims 1 to 9.
